# EUROPÄISCHE PATENTSCHRIFT

(11) **EP 3 641 328 B1**
(45) Veröffentlichungstag und Bekanntmachung des Hinweises auf die Patenterteilung: **02.09.2026**
(21) Anmeldenummer: 19185473.6
(22) Anmeldetag: 10.07.2019
(51) Int. Cl.: H04Q 9/00

(54) **EFFIZIENTE ÜBERTAGUNG VON DATEN UND/ODER INFORMATIONEN VON ELEKTRONISCHEN VERBRAUCHSMENGENZÄHLERN**
EFFICIENT TRANSMISSION OF DATA AND / OR INFORMATION FROM CONSUMER ELECTRONIC METERS
TRANSFERT EFFICACE DE DONNÉES ET / OU D'INFORMATIONS DES COMPTEURS ÉLECTRONIQUES DE QUANTITÉ DE CONSOMMATION

(30) Priorität: 19.10.2018 DE 102018126039
(43) Veröffentlichungstag der Anmeldung: 22.04.2020
(73) Patentinhaber: Innogy SE, 45128 Essen (DE)
(72) Erfinder: Nikodem, Torsten, 58453 Witten (DE); Radtke, Gerhard, 44869 Bochum (DE); Schmidt, Eugen, 46487 Wesel (DE)
(74) Vertreter: Cohausz & Florack

(56) Entgegenhaltungen:
- EP-A2- 2 866 461
- WO-A1-94/29825
- JP-A- H10 145 872
- US-A- 5 631 636
- US-A1- 2013 106 616
- US-B1- 6 478 748

## Beschreibung

### Gebiet

Beispielhafte Ausführungsformen der Erfindung betreffen elektronische Verbrauchsmengenzähler, insbesondere das effiziente Übertragen von seitens der elektronischen Verbrauchsmengenzähler erfassten Daten und/oder Informationen.

### Hintergrund

Die von einem elektronischen Verbrauchsmengenzähler (z. B. ein sogenannter Smartmeter) erfassten Daten und/oder Informationen können beispielsweise automatisch an einen Stromnetzbetreiber zur Abrechnung, zur Verhaltensanalyse der Kunden oder dergleichen übermittelt werden. Aufgrund der Vielzahl von verwendeten elektronischen Verbrauchsmengenzählern verursacht das häufige Übertragen dieser Informationen viel Datenvolumen. Die zu übertragenden Daten werden am elektronischen Verbrauchsmengenzähler erfasst und in der Regel über eine Funkstrecke zu einer Datensenke, die beispielsweise von einem Stromnetzbetreiber betrieben wird (z. B. ein Gateway und/oder ein Server), übertragen. Dort können diese Daten bzw. Informationen weiterverarbeitet und ausgewertet werden.

Typischerweise übertragen elektronische Verbrauchsmengenzähler hierbei den vollständigen, von dem jeweiligen Zähler erfassten und gespeicherten Datensatz. Dies führt dazu, dass die z. B. im Rahmen von (Daten-)Paketen übertragenen Informationen der elektronischen Verbrauchsmengenzähler stets den maximalen Informationsgehalt und damit auch die maximale Paketgröße aufweisen. Dies beansprucht ferner das maximal verfügbare Übertragungsintervall für die entsprechenden Datenpakete. Die Belegungsdauer einer Funkfrequenz zur Datenübertragung ist regulatorisch limitiert, so dass die große Auslastung problematisch ist.

Aus dem Stand der Technik bekannte elektronische Verbrauchsmengenzähler arbeiten beispielsweise gemäß der sogenannten wMBus-Norm (wireless Meter-Bus). Hierbei übertragt jeder elektronische Verbrauchsmengenzähler in einem 30 bis 50 Sekunden Intervall den erfassten und gespeicherten Datensatz bzw. die erfassten Daten und/oder Informationen. Ferner senden die jeweiligen elektronischen Verbrauchsmengenzähler unabhängig, ob ein Empfänger zum Empfang bereit, und/oder ob der Empfänger die Daten bzw. Informationen überhaupt benötigt. Es wird also stets der vollständige Datensatz in regelmäßigen Abständen nach der Art eines Push-Datentransfers übertragen, und dies unabhängig davon, ob dieser Datensatz überhaupt benötigt wird und bei einem Empfänger ankommen kann.

Im Fall eines flächendeckenden Einsatzes von einer Vielzahl von elektronischen Verbrauchsmengenzählern führt dieses Verhalten ferner zu einer erhöhten Kollisionswahrscheinlichkeit von übertragenen Datenpaketen, z. B. durch Interferenzen. Des Weiteren wird die zur Übertragung zur Verfügung stehende Übertragungsfrequenz oft unnötigerweise und zudem auch durch ein unnötig großes Datenpaket belegt.

WO 94/29825 A1 offenbart ein Ferninstrumentenlese- und Telemetriesystem aufweisend mindestens eine Instrumentenverbindung, die mit einer Datenerfassungsvorrichtung und einer Fernstationsabfragevorrichtung verbunden ist, bekannt. Die Abfragevorrichtung und die Instrumentenverbindung umfassen beide Funksender und Empfänger. Die Abfragevorrichtung gibt der Instrumentenverbindung einen bestimmten Zeitrahmen und einen bestimmten Frequenzkanal vor. Zuvor bestimmt die Abfragevorrichtung den besten verfügbaren Antwortkanal für die Übertragung von Informationen.

JP H10-145872A zeigt einen Funksender und -empfänger zur Zählerablesung bestehend aus einer Sende- und Empfangsschaltung, einem Steuerteil, einem Stromquellensteuerteil und einer Stromquelle, insbesondere einer Batterie als Stromquelle. In einer solchen Konfiguration wird zunächst geprüft, ob ein Datum oder eine Uhrzeit eines internen Kalenders in einer Betriebsperiode enthalten ist oder nicht. Sollte das Datum oder die Uhrzeit des internen Kalenders in der Betriebsperiode enthalten sein, wird eine sogenannte Betriebsflag gesetzt, aber sobald diese sich nicht mehr in der Betriebsperiode befindet, wird das Betriebsflag gelöscht. Die intermittierende Stromversorgung der Sende- und Empfangsschaltung wird hierdurch in einem kurzen Zyklus zu dem Zeitpunkt gestartet, zu dem der interne Kalender mit dem Startdatum oder der Startuhrzeit der Betriebsperiode übereinstimmt. Wenn der interne Kalender mit dem Enddatum oder der Enduhrzeit der Betriebsperiode übereinstimmt, wird die Stromversorgung der Sende- und Empfangsschaltung gestoppt.

US 5,631,636 zeigt ein Verfahren mit den folgenden Schritten: 1. Zunächst wird das Smartmeter periodisch durch ein Unterbrechungssignal ("interrupt signal") von einem Timer aktiviert und in einen Kommunikationsüberwachungsmodus für eine erste Zeitspanne versetzt. 2. Falls Kommunikationsaktivität innerhalb der ersten Zeitspanne delektiert wird, wird das Smartmeter für eine zweite Zeitspanne in einen Nachrichtenüberwachungsmodus versetzt, um zu erkennen, ob eine Nachricht für das Smartmeter vorliegt. 3. Sollte eine Nachricht für das Smartmeter vorliegen, wird das Smartmeter für eine dritte Zeitspanne in einen aktiven Modus versetzt, in dem das Smartmeter diese und weitere Nachrichten verarbeiten kann. 4. Die Nachrichten können auch die Information enthalten, dass der aktive Modus für einezusätzliche Zeitspanne verlängert werden soll. Teil dieser Information kann auch die Dauer der zusätzlichen Zeitspanne sein.

### Zusammenfassung einiger beispielhafter Ausführungsformen der Erfindung

Es wäre wünschenswert, die aus dem Stand der Technik bekannten Nachteile zu vermeiden, und insbesondere eine Möglichkeit bereitzustellen, die die Übertragung von Informationen möglichst effizient gestaltet, z. B. ein Senden von Daten und/oder Informationen unterbindet, wenn diese seitens einer Empfangseinheit gar nicht empfangen werden können, und/oder nur Daten und/oder Informationen überträgt, die einen Mehrwert für den Empfänger bieten, so dass diese z. B. nicht doppelt übertagen werden.

Gemäß einem ersten beispielhaften Aspekt der Erfindung wird ein Verfahren offenbart, durchgeführt von zumindest einer Vorrichtung, das folgendes umfasst:
- Erfassen oder Bestimmen einer Active-Flag-Information indikativ für eine aktive Datenübertragung von von der zumindest einen Vorrichtung bevorrateten Daten und/oder Informationen; und
- Aktivieren einer Datenübertragung der bevorrateten Daten und/oder Informationen zumindest teilweise basierend auf der Active-Flag-Information, und auf einer Timerinformation indikativ für eine Zeitspanne, nach deren Ablauf die Datenübertragung (z. B. automatisch) deaktiviert ist.

Dieses Verfahren wird beispielsweise von einem elektronischen Verbrauchsmengenzähler durchgeführt. Ein derartiger elektronischer Verbrauchsmengenzähler umfasst beispielsweise eine Steuereinrichtung und/oder eine Zählervorrichtung (z. B. Sensorik) oder ist zumindest mit der Steuereinrichtung und/oder der Zählervorrichtung (elektrisch) verbindbar. Derartige elektronische Verbrauchsmengenzähler werden auch als intelligente Zähler, moderne Messeinrichtungen oder Smartmeter bezeichnet. Derartige elektronische Verbrauchsmengenzähler werden beispielsweise zum Erfassen (z. B. Messen und/oder Zählen) von Verbrauchsmengen von Strom, Gas, Wasser und/oder Wärme, z. B. in einem Haushalt eingesetzt.

Es wird ferner eine Vorrichtung nach dem ersten Aspekt der Erfindung offenbart, die zur Ausführung des Verfahrens nach dem ersten Aspekt der Erfindung eingerichtet ist oder jeweilige Mittel zur Ausführung der Schritte des Verfahrens gemäß dem ersten Aspekt der Erfindung umfasst. Ein oder mehrere der Mittel können auch durch die gleiche Einheit ausgeführt werden. Beispielweise können ein oder mehrere der Mittel durch einen oder mehrere Prozessoren gebildet sein.

Ferner wird eine Vorrichtung nach dem ersten Aspekt der Erfindung offenbart, die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das Verfahren gemäß dem ersten Aspekt der Erfindung auszuführen.

Es wird ein Computerprogramm nach dem ersten Aspekt der Erfindung offenbart, das Programmanweisungen umfasst, die einen Prozessor zur Ausführung des Verfahrens gemäß dem ersten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Gemäß einem zweiten beispielhaften Aspekt der Erfindung wird ein System offenbart, das eine oder mehrere Vorrichtungen nach dem ersten Aspekt der Erfindung umfasst, wobei die eine oder mehrere Vorrichtungen nach dem ersten Aspekt der Erfindung zur Ausführung des Verfahrens gemäß dem ersten Aspekt der Erfindung eingerichtet sind oder Mittel zur Ausführung und/oder Steuerung der Schritte des Verfahrens gemäß dem ersten Aspekt der Erfindung aufweisen. Das System umfasst ferner eine oder mehrere weitere Vorrichtungen, z. B. eine oder mehrere Empfangseinheiten, die jeweils eingerichtet sind zum Senden und/oder Empfangen von Daten und/oder Informationen von und/oder an die eine oder mehreren Vorrichtungen nach dem ersten Aspekt der Erfindung.

Diese zwei Aspekte der vorliegenden Erfindung weisen u.a. die nachfolgend beschriebenen - teilweise beispielhaften - Eigenschaften auf.

Die Vorrichtung ist beispielsweise ein IoT (Internet-of-Things) Gerät, ein SmartHome Gerät, oder ein elektronischer Verbrauchsmengenzäher (z. B. ein Smartmeter), z. B. zum Zählen (d.h. Erfassen einer Verbrauchsmenge, z. B. eines Haushalts) von Strom, Gas, Wasser und/oder Wärme. Die Vorrichtung umfasst beispielsweise eine Kommunikationsschnittstelle oder ist alternativ mit der Kommunikationsschnittstelle (z. B. elektrisch) verbindbar. Die Vorrichtung umfasst beispielsweise ein Zählmodul (z. B. Sensorik) oder dergleichen zum Erfassen (z. B. Messen) einer (z. B. von einem Haushalt) verbrauchten Menge Strom, Gas, Wasser und/oder Wärme. Die Kommunikationsschnittstelle umfasst beispielsweise ein Funkmodul zum drahtlosen Kommunizieren mit einer anderen Entität, z. B. einer Empfangseinheit (z. B. eines Gateway und/oder Servers), z. B. über ein Kommunikationsnetz, so dass beispielsweise seitens der zumindest einen Vorrichtung bevorratete Daten und/oder Informationen (z. B. erfasste Verbrauchsmengen in Form von einem oder mehreren (Daten-)Paketen) an die andere Entität übertragen werden können.

Für den Fall, dass die Vorrichtung als elektronischer Verbrauchsmengenzäher ausgebildet ist, ist die Vorrichtung beispielsweise ein digitaler Strom- Gas-, Wasser und/oder Wärmezähler. Unter einem elektronischen Verbrauchsmengenzäher wird im Sinne des Gegenstands insbesondere eine moderne Messeinrichtung (Smartmeter), im engeren Sinne ein Stromzähler, verstanden, mittels welchem beispielsweise digital Daten und/oder Informationen empfangbar und/oder sendbar sind. Hierzu kann der elektronische Verbrauchsmengenzäher beispielsweise in ein Kommunikationsnetz eingebunden sein. Dies kann beispielsweise über die umfasste Kommunikationsschnittstelle realisiert sein. Der elektronische Verbrauchsmengenzähler kann beispielsweise über empfangene Daten und/oder Informationen (z. B: Parametrierungsinformationen) gesteuert und/oder geregelt werden. Empfangene Daten und/oder Informationen können beispielsweise ferner Tarifänderungen hinsichtlich des Preises von zu beziehendem Strom, Gas, Wasser und/oder Wärme umfassen. Empfangene Daten und/oder Informationen können beispielsweise auch eine oder mehrere Parametrierungsinformationen für die Vorrichtung umfassen, um nur einige nicht-limitierende Beispiele zu nennen. Gesendete Daten und/oder Informationen können beispielsweise erfasste Verbrauchsmengen von Strom, Gas, Wasser und/oder Wärme betreffen, und/oder erfasste (z. B. bevorratete/gespeicherte) Daten und/oder Informationen der Vorrichtung, die zum Senden von einer weiteren Entität angefragt werden, um nur einige nicht-limitierende Beispiele zu nennen. Diese Daten und/oder Informationen können beispielsweise an die zuvor beschriebene Empfangseinheit übermittelt (z. B. gesendet) werden.

Ein derartiger elektronischer Verbrauchsmengenzähler (z. B. Smartmeter) ist insbesondere ein Bestandteil von intelligenten Stromnetzen, sogenannten Smartgrids.

Optional umfasst die Vorrichtung einen Speicher, oder ist alternativ mit einem Speicher (z. B. elektrisch) verbindbar. Der Speicher ermöglicht beispielsweise das Speichern von einer oder mehreren Informationen, z. B. in einer Datenbank. Die Datenbank ermöglicht es beispielsweise, dass eine oder mehrere Verknüpfungen zwischen zumindest zwei verschiedenen Informationen abgespeichert werden können, z. B. über eine von der Datenbank umfasste Look-Up Tabelle. In dem Speicher können beispielsweise seitens der Vorrichtung erfasste Daten und/oder Informationen, z. B. erfasste (z. B. gemessene) Verbrauchsinformationen gespeichert werden. Ferner können in dem Speicher beispielsweise erfasste (z. B. empfangene) Parametrierungsinformationen und/oder Tarifänderungen hinsichtlich des Preises von zu beziehendem Strom, Gas, Wasser, Wärme oder dergleichen, um nur einige nicht-limitierende Beispiele zu nennen, gespeichert werden.

Die Kommunikationsschnittstelle umfasst beispielsweise einen Receiver und einen Transmitter, so dass Daten und/oder Informationen sowohl empfangen als auch gesendet werden können. Receiver und Transmitter können auch als eine Entität ausgebildet sein, z. B. als ein sogenannter Transceiver.

Die Active-Flag-Information kann beispielsweise bestimmt (z. B. erstmalig initialisiert) oder erfasst (z. B. empfangen) werden. Die Active-Flag-Information kann beispielsweise mittels der Kommunikationsschnittstelle der Vorrichtung erfasst werden.

Nach allen Aspekten der Erfindung startet die Active-Flag-Information den Ablauf der von der Timerinformation repräsentierten Zeitspanne.

Die Active-Flag-Information repräsentiert beispielsweise einen binären Wert. Für den Fall, dass die Active-Flag-Information beispielsweise den binären Wert "1" repräsentiert, kann beispielsweise automatisch der Ablauf der von der Timerinformation repräsentierten Zeitspanne gestartet werden. Während des Ablaufs dieser Zeitspanne erfolgt die Datenübertragung von bevorrateten Daten und/oder Informationen, z. B. entsprechend einer Parametrierungsinformation. Die Active-Flag-Information kann beispielsweise jederzeit auf den binären Wert "0" gesetzt werden. In diesem Fall erfolgt keine Datenübertragung (mehr). Ferner wird beispielsweise automatisch nach dem Ablauf der von der Timerinformation repräsentierten Zeitspanne die Active-Flag-Information auf den Wert "0" gesetzt. Es versteht sich, dass die Active-Flag-Information auch derart definiert sein kann, dass die repräsentierten Werte "0" und "1" in ihrer Funktion vertauscht sind. Ferner kann die Active-Flag-Information auch nicht-binäre, jedoch gleichwirkende Werte repräsentieren oder umfassen.

Optional kann eine weitere Entität, z. B. eine Empfangseinheit, wie etwa von einem Gateway und/oder einem Server (z. B. alternierend) hierzu eine Active-Information indikativ für einen aktiven Sendestatus der Kommunikationsschnittstelle der weiteren Entität (z. B. Empfangseinheit) einsetzen. Dies ermöglicht es beispielsweise zu koordinieren, dass bei einer bidirektionalen Kommunikation zwischen der zumindest einen Vorrichtung und z. B. der Empfangseinheit nur jeweils eine der beiden Entitäten Daten und/oder Informationen überträgt (z. B. sendet). Dies minimiert mitunter auftretende Interferenzen weitergehend. Entsprechend übertragt immer nur eine von diesen beiden beispielhaft angeführten Entitäten Daten und/oder Informationen. Es versteht sich, dass zwischen den beteiligten Entitäten Informationen, die ein entsprechendes Bestimmen, wer von beiden Entitäten Daten überträgt, also zum Setzen der Active -Information (z. B. indikativ für Entität aktiv oder inaktiv) übermittelbar sind.

Es versteht sich, dass alternativ die zumindest eine Vorrichtung ebenfalls eine derartige Active-Information einsetzen kann.

Die Timerinformation ist beispielsweise in dem zuvor beschriebenen Speicher gespeichert. Die Timerinformation ist indikativ für eine Zeitspanne, nach deren Ablauf die Kommunikationsschnittstelle deaktiviert wird. Das heißt die Kommunikationsschnittstelle ist zunächst in einem inaktiven Zustand (deaktiviert), so dass keine Daten und/oder Informationen gesendet bzw. empfangen werden können. Eine Empfangseinheit aktiviert die Datenübertragung, zeitgleich wird der Timer bzw. der Ablauf der von der Timerinformation repräsentierten Zeitspanne gestartet. Läuft der Timer aus und wird nicht vor seinem Ablaufen zurückgesetzt, so wird automatisch die Datenübertragung deaktiviert. Nach dem Ablauf der von der Timerinformation repräsentierten Zeitspanne (z. B. in Sekunden, Minuten, Stunden, Tagen, oder länger; z. B. 6 Stunden, um nur ein nicht-limitierendes Beispiel zu nennen) erfolgt die Deaktivierung der Datenübertragung, so dass keine Daten und/oder Informationen seitens der zumindest einen Vorrichtung gesendet werden bzw. werden können. Wenn die von der Timerinformation repräsentierte Zeitspanne abgelaufen ist, und die Datenübertragung der bevorrateten Daten und/oder Informationen deaktiviert ist, kann die Datenübertragung beispielsweise nach dem Ablauf einer weiteren Zeitspanne wieder aktiviert werden. Es versteht sich, dass dann erneut die Zeitspanne der Timerinformation abzulaufen beginnt, nach deren Ablauf dann wiederrum die Datenübertragung deaktiviert wird.

Gemäß einer beispielhaften Ausführungsform nach allen Aspekten der Erfindung umfasst das Verfahren ferner:
- Bestimmen einer neuen Timerinformation, so dass nach deren Ablauf Verfahren erneut ausgeführt wird.

Optional umfasst das Verfahren nach dem ersten Aspekt ferner den Schritt, dass ein Bestimmen einer neuen Timerinformation erfolgt, wobei diese neue Timerinformation von der "ersten" Timerinformation abweichende Zeitspanne repräsentieren kann.

Es versteht sich, dass die Zeitspanne parametriert werden kann, z. B. mittels einer Nutzereingabe oder mittels eines Übermittelns eines entsprechenden Befehls, so dass die Zeitspanne parametriert ist.

Nach allen Aspekten der Erfindung umfasst das Verfahren ferner:
- Erfassen einer Anfrage, wobei die Anfrage indikativ für eine oder mehrere Informationen (z. B. bevorratete Daten und/oder Information oder weitere Information, die seitens der Vorrichtung gespeichert sind, und ausgegeben werden können), die im Rahmen der Datenübertragung ausgegeben werden sollen ist; und
- Ausgeben bzw. Veranlassen des Ausgebens der angefragten Informationen.

Es erfolgt ein Erfassen der Anfrage, z. B. empfangen der Anfrage seitens der Kommunikationsschnittstelle. Die für eine Übermittlung seitens der Vorrichtung bevorrateten Informationen sind beispielsweise in einem Speicher der zumindest einen Vorrichtung gespeichert. Beispielsweise ist die Anfrage indikativ für angeforderte Verbrauchsinformationen, wie etwa Strom, Gas, Wasser und/oder Wärme. Die Anfrage ist ferner beispielsweise indikativ für angeforderte Verbrauchsinformationen für einen seitens der Anfrage definierten Zeitraum, z. B. für den letzten Tag, die letzte Woche, den letzten Monat, das letzte Jahr, oder eine Kombination hiervon, um nur einige nicht-limitierende Beispiele zu nennen. Die Anfrage ist beispielsweise indikativ für eine zeitliche Auflösung der angefragten Daten und/oder Informationen.

Gemäß einer beispielhaften Ausführungsform nach allen Aspekten der Erfindung ist die Anfrage ferner indikativ für eine oder mehrere Informationen, die als angefragte Informationen ausgegeben werden sollen oder deren Ausgabe veranlasst werden soll.

Die eine oder mehreren Informationen sind bzw. umfassen beispielsweise die bevorrateten Daten und/oder Informationen und/oder weitere Informationen, die seitens der Vorrichtung verfügbar, gespeichert oder dergleichen sind.

Entsprechend werden beispielsweise nur diejenigen Informationen übermittelt, die gemäß der Anfrage als zu übertragende Daten und/oder Informationen spezifiziert worden sind. Beispielsweise werden also nicht sämtliche abgespeicherte bzw. verfügbare Daten und/oder Informationen, die z. B. in dem Speicher der Vorrichtung bevorratet sind, ausgegeben bzw. deren Ausgabe wird veranlasst. Zeitgleich werden beispielsweise die Paketgrößen der auszugebenden Daten und/oder Informationen durch die Auswahl der einen oder mehreren Informationen, die als angefragte Informationen ausgegeben werden sollen (z. B. relevante Zählerdaten), auf das notwendige Minimum reduziert.

Die gemäß der Anfrage angefragten Daten und/oder Informationen werden anschließend ausgegeben bzw. deren Ausgabe wird veranlasst, z. B. an diejenige Entität, von der die Anfrage erhalten wurde. Alternativ können die angefragten Informationen beispielsweise an eine weitere Entität ausgegeben werden, die von derjenigen Entität, von der die Anfrage erhalten wurde, verschieden ist, wobei diese weitere Entität die angefragten Daten und/oder Informationen an diejenige Entität, von der die Anfrage erhalten wurde, weiterleitet.

Im Nachfolgenden dieser Spezifikation werden im Zusammenhang mit der Anfrage erfasste (z. B. empfangen) Daten und/oder Informationen, und auch seitens der Vorrichtung ausgegebene Daten und/oder Informationen, bzw. deren Ausgabe seitens der Vorrichtung veranlasst wird, auch mit der verkürzten Form "Daten und/oder Informationen" bezeichnet.

Mittels des Erfassens der Anfrage und dem Ausgeben der angefragten Informationen wird beispielsweise ein Pull-Prozess, bei dem die Steuerung im Wesentlichen seitens derjenigen Entität erfolgt, die die Anfrage an die Vorrichtung nach dem ersten Aspekt der Erfindung übermittelt hat, realisiert.

Die Vorrichtung ist beispielsweise parametriert, z. B. mittels einer (weiteren) Parametrierungsinformation. Eine derartige Parametrierungsinformation ist beispielsweise seitens der Vorrichtung in dem Speicher gespeichert. Eine derartige Parametrierungsinformation ist beispielsweise indikativ für die von der Timerinformation repräsentierte Zeitspanne, um nur ein nicht-limitierendes Beispiel zu nennen. Weitere Details hierzu sind im Nachfolgenden dieser Spezifikation ausgeführt.

Mittels der Timerinformation ist es ferner ermöglicht, ein Senden von Daten und/oder Informationen nach der Art eines Sleep-Timers zu realisieren. Nur für die Dauer, in der die Datenübertragung aktiv ist, ist ein Senden von Daten möglich, da beispielsweise nach dem Ablauf der von der Timerinformation repräsentierten Zeitspanne auch die Kommunikationsschnittstelle deaktiviert werden kann (z. B. zur Verbesserung des Energieverbrauchs der zumindest einen Vorrichtung). Entsprechend kann das zum Übertragen zu verwendende Übertragungsintervall festgelegt werden. Dieses Übertragungsintervall ist limitiert durch die Zeitspanne während der die Kommunikationsschnittstelle aktiviert ist. Dieses Limitieren ist möglich, da eine Auswahl der seitens der Vorrichtung ausgegebenen Daten und/oder Informationen erfolgt, die beispielsweise von der Anfrage definiert sind.

Das führt z. B. zu kleineren zu übertragenden Datenpaketen und damit zu kürzeren Übertragungsintervallen. Ferner wird das Senden der Daten aktiv von einem Empfänger (z. B. Empfangseinheit) aktiviert, d.h. z. B. nach einer Montage eines elektronischen Verbrauchszähler übertragt der elektronische Verbrauchszähler keine Daten und/oder Informationen (z. B. Datenpakete) und belegt somit keine Funkraum bzw. keine Sendezeit. Nur wenn beispielsweise gemäß der Timerinformation vorgesehen ist, eine Übertragung von Daten und/oder Informationen durchzuführen, geschieht dies auch. Dies kann beispielsweise seitens der Empfangseinheit parametriert werden, z. B. mittels einer Parametrierungsinformation. Diese Aktivierung kann vom Empfänger (z. B. Empfangseinheit eines Gateways und/oder eines Servers) jederzeit adaptiert und/oder widerrufen werden.

Gemäß einer beispielhaften Ausführungsform nach allen Aspekten der Erfindung umfasst oder repräsentiert die bevorrateten Daten und/oder Informationen und/oder die angefragten Informationen einen oder mehreren der folgenden Parameter:
i) Zählerstand einer (z. B. aktuellen) erfassten Verbrauchsmenge (z. B. für Strom und/oder Gas);
ii) Verlauf des Verbrauchs über eine vordefinierte Zeitspanne; und
iii) Parametrierungsinformation für die zumindest eine Vorrichtung.

Die Parameter i) und ii) können beispielsweise als angefragte Informationen ausgegeben werden bzw. deren Ausgabe kann veranlasst werden.

Mittels des Parameters iii) können beispielsweise Konfigurationsparameter, z. B. zum Spezifizieren von einer oder mehreren Übertragungsparametern und/oder zum Spezifizieren der von der Timerinformation repräsentierten Zeitspanne, an die Vorrichtung nach dem ersten Aspekt der Erfindung übermittelt werden.

Die Parameter i) bis iii) können beispielsweise dediziert oder alternativ in Form eines Datenpakets ausgegeben bzw. deren Ausgabe kann entsprechend veranlasst werden, z. B. von der Vorrichtung ausgebildet als elektronischer Verbrauchsmengenzähler an einen Empfänger (z. B. Gateway und/oder Server).

Gemäß einer beispielhaften Ausführungsform nach allen Aspekten der Erfindung umfasst das Verfahren ferner:
- Erfassen von einer oder mehreren Verbrauchsinformationen indikativ für eine Zeit, einen Ort, ein Datum, eine Verbrauchsmenge von Strom, Gas, Wasser, und/oder Wärme, oder eine Kombination hiervon; und
- Speichern der einen oder mehreren Verbrauchsinformationen als bevorratete Daten und/oder Informationen.

Die eine oder mehreren Verbrauchsinformationen werden beispielsweise mittels einer Sensorik erfasst (z. B. gemessen). Die Sensorik kann beispielsweise von der Vorrichtung umfasst sein, oder alternativ mit der Vorrichtung verbindbar sein. Für letzteren Fall ist die Sensorik beispielsweise mit der Vorrichtung elektrisch verbunden, so dass seitens der Sensorik erfasste Verbrauchsinformationen an die Vorrichtung übertragbar sind.

Die erfassten Verbrauchsinformationen können beispielsweise mit der Zeit, dem Ort, oder einer Kombination hiervon verknüpft sein. Die Zeit und/oder der Ort können indikativ für die Zeit oder den Ort sein, zu der bzw. an dem die Verbrauchsmenge(n) von Strom und/oder Gas erfasst wurde(n). Beispielsweise kann die Vorrichtung mit mehr als einer Sensorik verbunden sein, wobei die jeweiligen Sensoriken an verschiedenen Stellen im Haushalt eine oder mehrere Verbrauchsinformationen erfassen (z. B. messen) können.

Nach allen Aspekten der Erfindung bewirkt die Timerinformation ferner, dass nach dem Ablauf der von der Timerinformation repräsentierten Zeitspanne gemäß einer von der Timerinformation ebenfalls von der Timerinformation repräsentierten vordefinierten Dauer die Datenübertragung deaktiviert wird.

Die Timerinformation repräsentiert oder umfasst ferner eine vordefinierte Dauer, z. B. eine weitere Zeitspanne, die gemäß der beispielhaften Ausführungsform beispielsweise definiert, wie lange die Kommunikationsschnittstelle nach deren Aktivierung aktiv bleibt, bevor die Übertragung der Messwerte wieder deaktiviert wird. Diese weitere Zeitspanne kann beispielsweise mittels einer Parametrierungsinformation eingestellt werden. Diese weitere Zeitspanne definiert beispielsweise ferner zumindest indirekt das zur Übertragung von Daten und/oder Informationen zur Verfügung stehende Übertragungsintervall.

Nach allen Aspekten der Erfindung umfasst das Verfahren ferner:
- Erfassen oder Bestimmen einer Rücksetzinformation indikativ für ein Setzen der Active-Flag-Information, wobei die Rücksetzinformation die von der Timerinformation repräsentierte Zeitspanne vorzeitig zurücksetzt und der Ablauf dieser von der Timerinformation repräsentierten Zeitspanne von vorne beginnt.

Das Deaktivieren der Datenübertragung kann beispielsweise basierend auf der Rücksetzinformation dauerhaft unterbunden werden, z. B. durch ein wiederholtes Erfassen oder Bestimmen entsprechender Rücksetzinformationen jeweils vor dem Ablauf einer (momentan) laufenden Zeitspanne der Timerinformation.

Die Rücksetzinformation setzt die seitens der Timerinformation repräsentierte Zeitspanne, bei deren Ablauf die Datenübertragung unterbunden bzw. deaktiviert wird, zurück. Es versteht sich, dass dieses Rücksetzen vor dem Ablauf der von der Timerinformation repräsentierten Zeitspanne erfolgen muss, um das Deaktivieren der Datenübertragung seitens der zumindest einen Vorrichtung nach dem ersten Aspekt zu unterbinden.

Die Rücksetzinformation setzt beispielsweise ferner die seitens der Timerinformation repräsentierte Zeitspanne, bei deren Ablauf die Kommunikationsschnittstelle deaktiviert wird, zurück. Es versteht sich, dass dieses Rücksetzen vor dem Ablauf der von der Timerinformation repräsentierten Zeitspanne erfolgen muss, um das Deaktivieren der Kommunikationsschnittstelle zu unterbinden.

Sollte beispielsweise eine dauerhafte Deaktivierung der Datenübertragung und/oder Kommunikationsschnittstelle gewünscht sein, z. B. für eine oder zwei Wochen, in denen der Haushalt, in dem die Vorrichtung z. B. angeordnet ist, z. B. urlaubsbedingt unbewohnt ist, kann dies beispielsweise mittels der erfassten oder bestimmten Rücksetzinformation erzielt werden.

Die Rücksetzinformation wird beispielsweise erfasst, indem diese empfangen wird, z. B. von derjenigen Entität (z. B. Empfangseinheit), von der auch die Anfrage empfangen wurde bzw. wird. Die Rücksetzinformation kann alternativ auch bestimmt werden, indem beispielsweise eine Person (z. B. Bewohner des Haushalts, in dem die Vorrichtung angeordnet ist) eine entsprechende Eingabe in die Vorrichtung eingibt. Sollte der Empfänger dauerhaft nicht genutzt werden, ist es wünschenswert, dass die parametrierten Ausgaben von Daten und/oder Informationen eingestellt werden. Hierzu kann eine eventuelle Aktivierung der Kommunikationsschnittstelle zurücksetzt werden oder dies geschieht automatisch nach dem Auslaufen der von der Timerinformation repräsentierten Zeitspanne, sofern die Rücksetzinformation für die besagte Timerinformation ausbleibt.

Nach allen Aspekten der Erfindung umfasst das Verfahren ferner:
- Erfassen (z. B. Empfangen) von zumindest einer weiteren Parametrierungsinformation indikativ für ein Parametrieren der Kommunikationsschnittstelle, wobei basierend auf der weiteren Parametrierungsinformation zumindest ein erstmaliges Bestimmen der Timerinformation erfolgt.

Die weitere Parametrierungsinformation kann ferner indikativ für eine erstmalige Aktivierung der Kommunikationsschnittstelle der Vorrichtung sein. In diesem Fall kann die weitere Parametrierungsinformation beispielsweise erfasst werden, indem diese lokal in die Vorrichtung eingegeben wird. Alternativ oder zusätzlich kann die weitere Parametrierungsinformation in diesem Fall auch empfangen werden.

Die weitere Parametrierungsinformation kann ferner indikativ für einen Funkmodus sein, der zur Übertragung (z. B. Erfassen der Anfrage, Ausgabe bzw. Veranlassen der Ausgabe von Daten und/oder Informationen) verwendet werden kann. Es versteht sich, dass der Funkmodus mittels einer derartigen weiteren Parametrierungsinformation auch geändert werden kann. Beispielsweise kann der Funkmodus derart definiert sein, dass viele Daten (z. B. Parameter i) und ii)) bei einer schnellen Kommunikationsverbindung übertragen werden, wenige Daten (z. B. nur Parameter i)) bei einer langsamen Kommunikationsverbindung.

Gemäß einer beispielhaften Ausführungsform nach allen Aspekten der Erfindung repräsentiert oder umfasst die weitere Parametrierungsinformation ferner einen oder mehrere der folgenden Parameter:
a) Frequenz zum Senden und/oder Empfangen von Informationen;
b) zu verwendende Bandbreite zum Senden und/oder Empfangen von Informationen;
c) zu verwendendes Modulationsverfahren zum Senden und/oder Empfangen von Informationen;
d) zu verwendendes Kodierungsverfahren zum Senden und/oder Empfangen von Informationen; und
e) Adaptieren der von der Timerinformation repräsentierten Zeitspanne.

Gemäß einer beispielhaften Ausführungsform nach allen Aspekten der Erfindung werden für den Fall, dass die Kommunikationsschnittstelle aktiviert ist, und keine Anfrage erfasst, keine Informationen ausgegeben bzw. deren Ausgabe wird nicht veranlasst.

Entsprechend erfolgt beispielsweise kein Übertragen von Daten und/oder Informationen (z. B. Datenpaket(e)), wenn keine Anfrage zum Erhalt von Informationen (z. B. von einer Empfangseinheit, wie etwa einem Gateway und/oder seinem Server) empfangen wurde.

Gemäß einer beispielhaften Ausführungsform nach allen Aspekten der Erfindung etabliert die Kommunikationsschnittstelle eine drahtlose Kommunikationsverbindung zu einer Empfangseinheit (z. B. umfasst von einer weiteren Entität oder zumindest mit dieser weiteren Entität (elektrisch) verbindbar, wobei die weitere Entität beispielsweise ein Gateway und/oder ein Server ist), wobei die Kommunikationsschnittstelle ferner zumindest einen Transceiver zum Senden und Empfangen von Informationen aufweist.

Für die Lösung der oben beschriebenen Probleme wird mit Hilfe eines Rückkanals die Auswahl der zu übertragenden Daten ermöglicht.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1: eine schematische Darstellung einer beispielhaften Ausführungsform eines Systems nach dem zweiten Aspekt der Erfindung;
- Fig. 2a-c: jeweils ein Flussdiagramm einer beispielhaften Ausführungsform eines Verfahrens nach dem ersten Aspekt der Erfindung, das im Kontext der Erfindung beispielsweise von dem elektronischen Verbrauchsmengenzähler 130 nach Fig. 1 ausgeführt werden kann; und
- Fig. 3: eine schematische Darstellung einer beispielhaften Ausführungsform einer Vorrichtung gemäß dem ersten Aspekt der Erfindung.

### Detaillierte Beschreibung einiger beispielhafter Ausführungsformen der Erfindung

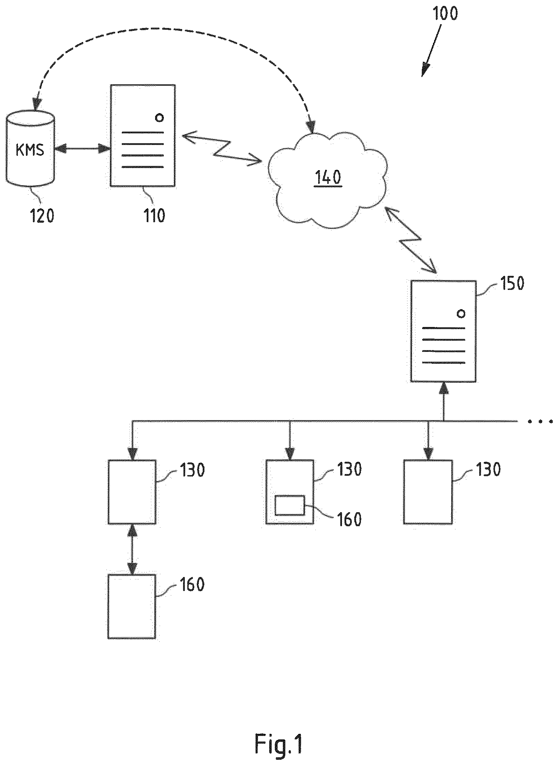

Fig. 1 ist eine schematische Darstellung einer beispielhaften Ausführungsform eines Systems 100 gemäß der vorliegenden Erfindung. Das System 100 umfasst einen Server 110 und eine optionale Datenbank 120. Die Datenbank 120 ist beispielsweise von dem Server 110 umfasst, oder zumindest mit dem Server 110 verbindbar, z. B. über eine Kommunikationsverbindung. Diese Kommunikationsverbindung kann beispielsweise über ein Kommunikationsnetz 140 (z. B. dem Internet) realisiert sein, oder eine direkte Kommunikationsverbindung sein.

Ferner ist der Server 110 beispielsweise über ein Kommunikationsnetz 140 mit einer oder mehreren weiteren Entitäten des Systems 100 verbunden. Vorliegend ist der Server 110 mit einem Gateway 150 verbunden. Ein derartiges Gateway 150 kann beispielsweise mit einer oder mehreren Vorrichtungen 130 (z. B. jeweils ein elektronischer Verbrauchsmengenzähler (z. B. Smartmeter)) verbunden sein, z. B. über ein Bussystem, wie in Fig. 1 schematisch dargestellt.

Die Vorrichtung 130 kann beispielsweise ein Smartmeter, ein SmartHome, und/oder ein IoT Gerät sein. Vorliegend ist jede der dargestellten Vorrichtungen 130 als Smartmeter zum Erfassen eines Verbrauchs, z. B. von Strom, Gas, Wasser, und/oder Wärme in einem Haushalt (in Fig. 1 nicht dargestellt) ausgebildet. Beispielsweise kann jeder der elektronischen Verbrauchsmengenzähler eine Sensorik 160, z. B. zum Erfassen (z. B. Messen) von einer oder mehreren Verbrauchsinformationen indikativ für eine Verbrauchsmenge Strom, Gas, Wasser, und/oder Wärme in dem Haushalt umfassen. Die Sensorik kann beispielsweise von dem Smartmeter umfasst sein und zusammen können diese eine einzige Entität ausbilden (vgl. Smartmeter 130 in der Mitte). Alternativ kann die Sensorik 160 nicht von dem Smartmeter umfasst sein, sondern mit dem Smartmeter 130 verbunden sein, z. B. über eine elektrische Verbindung (vgl. Smartmeter 130 links dargestellt).

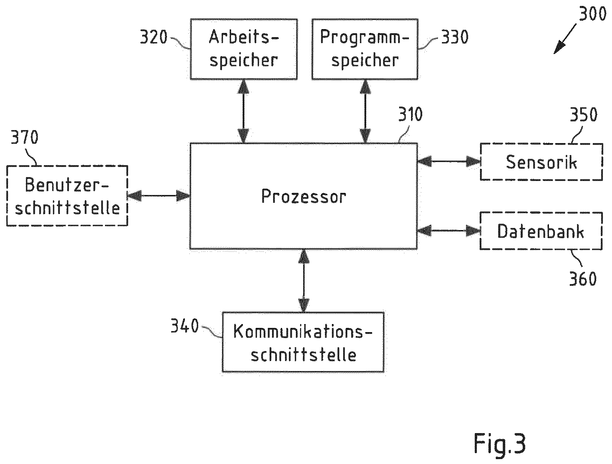

Beispielhafte Ausgestaltungen der Erfindung erlauben es, dass jede der Vorrichtungen 130 beispielsweise ein Verfahren nach dem ersten Aspekt der Erfindung ausführt und/oder steuert. Die Koordinierung der Kommunikation zwischen einem jeweiligen Smartmeter 130 und dem Gateway 150 und/oder dem Server 110 übernimmt vorliegend das Gateway 150 und/oder der Server 110 (Pull-Prozess). Ein jeweiliges Smartmeter 130 ist derart parametriert, dass nach einem Ablauf einer von einer Timerinformation repräsentierten Zeitspanne das jeweilige Smartmeter130 eine von diesem durchgeführte Datenübertragung deaktiviert. Ferner kann das jeweilige Smartmeter 130 eine Anfrage empfangen, die beispielsweise spezifiziert, welche Informationen seitens des jeweiligen Smartmeters 130 (zurück) übermittelt werden sollen. Hierbei handelt es sich beispielsweise um Verbrauchsinformationen, die auf einem lokalen Speicher des jeweiligen Smartmeters 130 bevorratet sind, z. B. eine Datenbank 360 nach Fig. 3. Innerhalb des Intervalls können auch die angefragten Daten und/oder Informationen ausgegeben werden. Alternativ können diese auch in dem oder einem der nächsten Intervalle, in denen die Datenübertragung aktiv ist, ausgegeben werden. Nach dem Ablauf der Zeitspanne wird die Datenübertragung des jeweiligen Smartmeters 130 wieder deaktiviert. Z. B. kann nach dem Deaktivieren der Datenübertragung des links dargestellten Smartmeters 130 die Datenübertragung des in der Mitte dargestellten Smartmeters 130 aktiviert werden, so dass jeweils nur ein Smartmeter innerhalb eines Bereichs Daten und/oder Informationen übertragen kann. Der Bereich spezifiziert beispielsweise ein geographisches Gebiet, in dem es zwischen einer Vielzahl von Smartmetern, die mittels einer drahtlosen Kommunikationsverbindung Daten und/oder Informationen übertragen, zu Interferenzen kommen kann.

Damit senden nur diejenigen Smartmeter Daten und/oder Informationen, deren Datenübertragung
- aktiviert worden ist, und/oder
- regelmäßig aktiv gehalten wird.

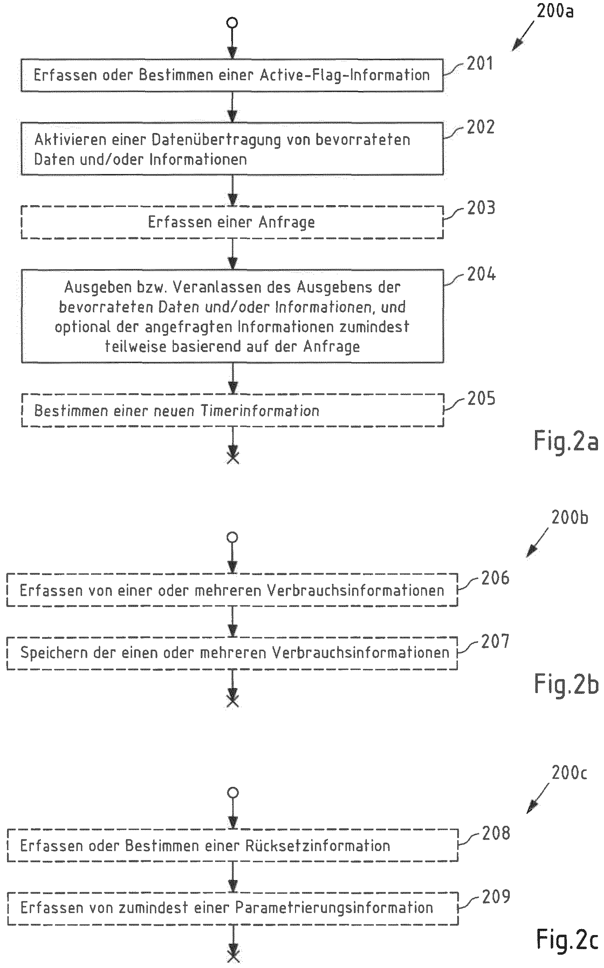

Fig. 2a bis 2c stellen jeweils ein Flussdiagramm 200a bis 200c einer beispielhaften Ausführungsform eines Verfahrens nach dem ersten Aspekt der Erfindung dar, das im Kontext der vorliegenden Erfindung ausgeführt werden kann. Das Verfahren wird beispielsweise von der Vorrichtung 130 der Fig. 1 ausgeführt, die beispielsweise als Vorrichtung 300 der Fig. 3 ausgebildet sein kann.

Die Flussdiagramme 200b der Fig. 2b und 200c der Fig. 2c stellen Flussdiagramme dar, die im Rahmen des Ausführens des Flussdiagramms 200a der Fig. 2a zusätzlich ausgeführt werden können. Das Flussdiagramm 200a kann beispielsweise wiederholt ausgeführt werden, um jeweils nach einem Ablauf einer von der Timerinformation repräsentierten Zeitspanne eine Datenübertragung zu aktivieren. Währenddessen kann beispielsweise mittels einer Sensorik der Vorrichtung 130 ein Erfassen von einer oder mehreren Verbrauchsinformationen parallel durchgeführt werden (vgl. Schritt 206). Gleiches gilt für das Bestimmen der Rücksetzinformation (vgl. Schritt 208) und/oder das Erfassen von zumindest einer (weiteren) Parametrierungsinformation (vgl. Schritt 209).

In einem ersten Schritt 201 erfolgt ein Erfassen oder Bestimmen einer Active-Flag-Information. Die Active-Flag-Information wird beispielsweise erfasst, indem diese seitens einer Kommunikationsschnittstelle (z. B. Kommunikationsschnittstelle 340 der Fig. 3) empfangen. Die Active-Flag-Information wird beispielsweise bestimmt, indem diese seitens der Vorrichtung - z. B. im Rahmen einer Initialisierung - erstmalig festgesetzt wird.

In einem zweiten Schritt 202 erfolgt ein Aktivieren der Datenübertragung von bevorrateten Daten und/oder Informationen für die Dauer einer von einer Timerinformation repräsentierten Zeitspanne. Die Timerinformation ist beispielsweise in einem Speicher (z. B. Datenbank 360 der Fig. 3) gespeichert.

In einem optionalen dritten Schritt 203 erfolgt ein Erfassen einer Anfrage. Die Anfrage wird beispielsweise erfasst, indem die Anfrage von einer weiteren Entität (z. B. Gateway 150 und/oder Server 110 der Fig. 1) gesendet wird, und anschließend von der Vorrichtung 130 empfangen wird.

In einem vierten Schritt 204 erfolgt ein Ausgeben bzw. ein Veranlassen des Ausgebens der Daten und/oder Informationen, z. B. zumindest teilweise basierend auf der Anfrage. Die Ausgabe bzw. das Veranlassen der Ausgabe erfolgt beispielsweise von der Vorrichtung 130 an das Gateway 150 und/oder den Server 110 der Fig. 1. Insbesondere erfolgt die Ausgabe bzw. das Veranlassen der Ausgabe beispielsweise an diejenige Entität, die die Anfrage, die in dem Schritt 203 erfasst wurde, gesendet hat. Die Ausgabe bzw. das Veranlassen der Ausgabe kann beispielsweise auch an das Gateway 150 der Fig. 1 erfolgen, wobei dann das Gateway 150 der Fig. 1 die erhaltenen Daten und/oder Informationen weiterleitet, z. B. an den Server 110 nach Fig. 1.

In einem optionalen fünften Schritt 205 erfolgt ein Bestimmen einer neuen Timerinformation, beispielsweise für den Fall, dass die gemäß der Timerinformation repräsentiert Zeitspanne abgelaufen ist und die Datenübertragung deaktiviert wurde. Der Schritt 205 wird beispielsweise auch optional ausgeführt für den Fall, dass dies gemäß einer erfassten (weiteren) Parametrierungsinformation als Aktion ausgelöst wurde (vgl. Schritt 209 der Fig. 2c).

In dem optionalen Schritt206, der parallel zu einem oder mehreren der Schritte 201 bis 205 ausgeführt werden kann, erfolgt ein Erfassen von einer oder mehreren Verbrauchsinformationen. Sind eine oder mehrere Verbrauchsinformationen erfasst, können diese in dem optionalen Schritt 207 gespeichert werden, z. B. in der Datenbank 360 der Fig. 3. Der optionale Schritt 207 kann ebenfalls parallel zu einem oder mehreren der Schritte 201 bis 205 ausgeführt werden.

In dem optionalen Schritt 208, der parallel zu einem oder mehreren der Schritte 201 bis 205 ausgeführt werden kann, erfolgt ein Erfassen oder Bestimmen einer Rücksetzinformation. Die Rücksetzinformation kann beispielsweise erfasst werden, indem diese beispielsweise von dem Gateway 150 und/oder dem Server 110 der Fig. 1 gesendet, und dann von der Vorrichtung 130 der Fig. 1 empfangen wird. Die Rücksetzinformation kann beispielsweise bestimmt werden, indem diese z. B. händisch von einem Benutzer in die Vorrichtung 130 eingegeben wird, z. B. mittels einer Benutzerschnittstelle 370 der Fig. 3. Eine Rücksetzinformation, die erfasst oder bestimmt wurde, bewirkt beispielsweise, dass die Active-Flag-Information (vgl. Schritt 201) derart gesetzt wird, dass die Datenübertragung von Daten und/oder Informationen aktiviert ist (z. B. repräsentiert die Active-Flag-Information dann den binären Wert "1").

In dem optionalen Schritt 209, der parallel zu einem oder mehreren der Schritte 201 bis 205 ausgeführt werden kann, erfolgt ein Erfassen von der zumindest einen (weiteren) Parametrierungsinformation.

Fig. 3 zeigt eine schematische Darstellung einer beispielhaften Ausführungsform einer Vorrichtung 300 (z. B. Vorrichtung 130 nach Fig. 1), die im Kontext der vorliegenden Erfindung eingesetzt werden kann.

Die Vorrichtung 300 kann beispielsweise die Vorrichtung 130 nach Fig. 1 repräsentieren, und dann beispielsweise das Verfahren des Flussdiagramms 200a der Fig. 2a, und optional ferner das Flussdiagramm 200b der Fig. 2b und/oder das Flussdiagramm 200c der Fig. 2c ausführen.

Vorrichtung 300 umfasst einen Prozessor 310 mit zugeordnetem Arbeitsspeicher 320 und Programmspeicher 330. Der Prozessor 310 führt beispielsweise Programmanweisungen aus, die im Programmspeicher 330 gespeichert sind. Die Programmanweisungen führen das Verfahren gemäß dem ersten Aspekt der Erfindung aus und/oder steuern dieses. Damit enthält der Programmspeicher 330 ein Computerprogramm nach einem beispielhaften Aspekt der Erfindung und stellt ein Computerprogrammprodukt zu dessen Speicherung dar. Vorrichtung 300 stellt ein Beispiel einer Vorrichtung gemäß dem ersten Aspekt der Erfindung dar.

Der Programmspeicher 330 kann beispielsweise ein persistenter Speicher, wie beispielsweise ein Read-Only-Memory (ROM)-Speicher sein. Der Programmspeicher kann beispielsweise fest mit dem Prozessor 310 verbunden sein, kann aber alternativ auch lösbar mit dem Prozessor 310 verbunden sein, beispielsweise als Speicherkarte, Diskette oder optisches Datenträgermedium (z. B. eine CD, DVD, oder Blu-Ray). In dem Programmspeicher 330, oder in einem separaten Speicher, können auch weitere Informationen abgespeichert sein.

Der Arbeitsspeicher 320 wird beispielsweise zur Speicherung temporärer Ergebnisse während der Abarbeitung der Programmanweisungen genutzt. Es handelt sich hierbei beispielsweise um einen flüchtigen Speicher, wie beispielsweise einen Random-Access-Memory (RAM)-Speicher.

Der Prozessor 310 ist ferner beispielsweise mit einer Kommunikationsschnittstelle 340 verbunden, mit der beispielsweise ein Informationsaustausch mit anderen Vorrichtungen möglich ist (siehe die Pfeile in Fig. 1).

Die Vorrichtung 300 kann auch weitere Komponenten enthalten, z. B. Sensorik 350 insbesondere zum Erfassen von einer oder mehreren Verbrauchsinformationen, und/oder optional eine Datenbank 360 insbesondere zum Speichern von der einen oder den mehreren Verbrauchsinformationen, einer oder mehreren Timerinformationen, einer oder mehreren Rücksetzinformationen, einer oder mehreren Parametrierungsinformationen, einer oder mehreren weiteren Parametrierungsinformationen, einer oder mehrere bevorrateten Daten und/oder Informationen, einer oder mehrere der Parameter i) bis iii), einer oder mehrere der Parameter a) bis e), einer Active-Flag-Information, oder einer Kombination hiervon, um nur einige nicht-limitierende Beispiele zu nennen. Falls Vorrichtung 300 die Vorrichtung 130 nach Fig. 1 repräsentiert, ist beispielsweise eine Steuereinrichtung bzw. Mittel zum Steuern der Vorrichtung 300 vorhanden. Die Vorrichtung 300 kann auch eine optionale Benutzerschnittstelle 370 enthalten, z. B. ein Display und/oder Eingabemittel (z. B. Tastatur und/oder Maus) zum Erfassen von einer oder mehreren Benutzereingaben und/oder zum (z. B. visuellen) Ausgeben von Informationen an einen Benutzer der Vorrichtung 300. Ferner sind diese Komponenten 350, 360, 370 beispielsweise mit dem Prozessor 310 operativ verbunden.

Falls Vorrichtung 300 die Vorrichtung 130 nach Fig. 1 repräsentiert, ist beispielsweise ein Erfassungsmittel zum Erfassen einer Active-Flag-Information (vgl. Schritt 201 nach Fig. 2a), von einer Anfrage (Schritt 203 nach Fig. 2a), von einer oder mehreren Verbrauchsinformationen (Schritt 206 nach Fig. 2b), von einer Rücksetzinformation (Schritt 208 nach Fig. 2c), von zumindest einer (weiteren) Parametrierungsinformation (Schritt 209 nach Fig. 2c), oder einer Kombination hiervon vorgesehen. Ferner ist beispielsweise ein Bestimmungsmittel zum Bestimmen einer neuen Timerinformation (Schritt 205 der Fig. 2a), zum Bestimmen einer Rücksetzinformation (Schritt 208 der Fig. 2c), oder einer Kombination hiervon , um nur einige nicht-limitierende Beispiele zu nennen, vorhanden, wobei das Erfassungsmittel und/oder das Bestimmungsmittel beispielsweise als strukturelle und/oder funktionelle Einheiten eingerichtet sind und beispielsweise von dem Prozessor 310 umfasst oder mit diesem operativ verbunden sind.

Die in dieser Spezifikation beschriebenen beispielhaften Ausführungsformen / Ausführungs-beispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vor-liegend nicht so verstanden werden, dass das Merkmal für die Funktion des Ausführungsbei-spiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teil-weise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehr-zahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt von zumindest einer Vorrichtung, umfassend:
- Erfassen oder Bestimmen einer Active-Flag-Information (201) indikativ für eine aktive Datenübertragung von von der zumindest einen Vorrichtung bevorrateten Daten und/oder Informationen;
- Aktivieren einer Datenübertragung der bevorrateten Daten und/oder Informationen (202) zumindest teilweise basierend auf der Active-Flag-Information, und auf einer Timerinformation indikativ für eine Zeitspanne, nach deren Ablauf die Datenübertragung deaktiviert ist;
- Erfassen einer Anfrage (203), wobei die Anfrage indikativ für eine oder mehrere Informationen, die im Rahmen der Datenübertragung ausgegeben werden sollen, ist;
- Ausgeben bzw. Veranlassen des Ausgebens der angefragten Informationen (204);
- Erfassen von zumindest einer weiteren Parametrierungsinformation indikativ für ein Parametrieren einer Kommunikationsschnittstelle, wobei basierend auf der weiteren Parametrierungsinformation zumindest ein erstmaliges Bestimmen der Timerinformation erfolgt; und
- Erfassen oder Bestimmen einer Rücksetzinformation (208) indikativ für ein Setzen der Active-Flag-Information, wobei die Rücksetzinformation die von der Timerinformation repräsentierte Zeitspanne vorzeitig zurücksetzt und der Ablauf dieser von der Timerinformation repräsentierten Zeitspanne von vorne beginnt;
- wobei die Active-Flag-Information den Ablauf der von der Timerinformation repräsentierten Zeitspanne startet; und
- wobei die Timerinformation ferner bewirkt, dass nach dem Ablauf der von der Timerinformation repräsentierten Zeitspanne gemäß einer von der Timerinformation ebenfalls repräsentierten vordefinierten Dauer die Datenübertragung deaktiviert wird.

2. Verfahren nach einem der vorhergehenden Ansprüche, wobei die bevorrateten Daten und/oder Informationen und/oder angefragten Informationen einen oder mehreren der folgenden Parameter i) bis iii) repräsentiert oder umfasst:
i) Zählerstand einer erfassten Verbrauchsmenge;
ii) Verlauf des Verbrauchs über eine vordefinierte Zeitspanne; und
iii) Parametrierungsinformation für die zumindest eine Vorrichtung.

3. Verfahren nach einem der vorhergehenden Ansprüche, ferner umfassend:
- Erfassen von einer oder mehreren Verbrauchsinformationen indikativ für eine Zeit, einen Ort, ein Datum, eine Verbrauchsmenge von Strom, Gas, Wasser, und/oder Wärme, oder eine Kombination hiervon; und
- Speichern der einen oder mehreren Verbrauchsinformationen als bevorratete Daten und/oder Informationen.

4. Verfahren nach einem der vorhergehenden Ansprüche, wobei die weitere Parametrierungsinformation ferner einen oder mehrere der folgenden Parameter a) bis e) repräsentiert oder umfasst:
a) Frequenz zum Senden und/oder Empfangen von Informationen;
b) zu verwendende Bandbreite zum Senden und/oder Empfangen von Informationen;
c) zu verwendendes Modulationsverfahren zum Senden und/oder Empfangen von Informationen;
d) zu verwendendes Kodierungsverfahren zum Senden und/oder Empfangen von Informationen; und
e) Adaptieren der von der Timerinformation repräsentierten Zeitspanne.

5. Verfahren nach einem der vorhergehenden Ansprüche, wobei für den Fall, dass die Datenübertragung deaktiviert ist, und keine Anfrage erfasst wird, keine angefragten Informationen ausgegeben werden bzw. deren Ausgabe nicht veranlasst wird.

6. Verfahren nach einem der vorhergehenden Ansprüche, ferner umfassend:
- Bestimmen einer neuen Timerinformation (205), so dass nach deren Ablauf das Verfahren erneut ausgeführt wird.

7. Verfahren nach einem der vorhergehenden Ansprüche, wobei die Kommunikationsschnittstelle eine drahtlose Kommunikationsverbindung zu einer Empfangseinheit etabliert, wobei die Kommunikationsschnittstelle ferner zumindest einen Transceiver zum Senden und Empfangen von Informationen aufweist.

8. Vorrichtung, insbesondere ein elektronischer Verbrauchsmengenzähler (130), eingerichtet zur Ausführung des Verfahrens nach einem der Ansprüche 1 bis 7 oder umfassend jeweilige Mittel zur Ausführung der Schritte nach einem der Ansprüche 1 bis 7.

9. System, umfassend eine oder mehrere Vorrichtungen (130), die eingerichtet sind zur Ausführung des Verfahrens nach einem der Ansprüche 1 bis 7 oder Mittel zur Ausführung der Schritte des Verfahrens nach einem der Ansprüche 1 bis 7 aufweisen, und zumindest eine Empfangsvorrichtung, die eingerichtet ist zum Senden und/oder Empfangen von Informationen von und/oder an die eine oder mehreren Vorrichtungen.

10. Computerprogramm, umfassend Programmanweisungen, die einen Prozessor (310) zur Ausführung des Verfahrens gemäß einem der Ansprüche 1 bis 7 veranlassen, wenn das Computerprogramm auf dem Prozessor läuft.

## Claims

1. A method performed by at least one device, comprising:
- detecting or determining a piece of an active flag information (201) indicative of an active data transmission of data and/or pieces of information stored by the at least one device;
- activating a data transmission of the stored data and/or pieces of information (202) at least partially based on the active flag information, and on a piece of timer information indicative of a time period after the expiration of which the data transmission is deactivated;
- detecting a request (203), wherein the request is indicative of one or more pieces of information to be output as part of the data transmission;
- outputting and causing the outputting, respectively, of the requested pieces of information (204);
- detecting at least one additional piece of parameterization information indicative of the parameterizing of a communication interface, wherein, based on the additional piece of parameterization information, at least an initial determining of the piece of timer information is performed; and
- detecting or determining a piece of reset information (208) indicative of setting the piece of active flag information, wherein the piece of reset information prematurely resets the time period represented by the piece of timer information and the elapse of this time period represented by the piece of timer information begins anew;
- wherein the piece of active flag information initiates the elapse of the time period represented by the piece of timer information; and
- wherein the piece of timer information further causes that the data transmission is deactivated after the expiration of the time period represented by the piece of timer information in accordance with a predefined duration also represented by the piece of timer information.

2. The method according to one of the preceding claims, wherein the stored data and/or pieces of information and/or pieces of requested information represent or comprise one or more of the following parameters i) through iii):
i) a meter reading of a detected consumption quantity;
ii) history of the consumption over a predefined time period; and
iii) a piece of parameterization information for the at least one device.

3. The method according to any of the preceding claims, further comprising:
- detecting one or more pieces of consumption information indicative of a time, a location, a date, a consumption quantity of electricity, gas, water, and/or heat, or a combination thereof; and
- storing the one or more pieces of consumption information as stored data and/or pieces of information.

4. The method according to any of the preceding claims, wherein the further piece of parameterization information further represents or comprises one or more of the following parameters a) through e):
a) frequency for transmitting and/or receiving pieces of information;
b) bandwidth to be used for transmitting and/or receiving pieces of information;
c) modulation method to be used for transmitting and/or receiving pieces of information;
d) coding method to be used for transmitting and/or receiving pieces of information; and
e) adapting the time period represented by the piece of timer information.

5. The method according to any one of the preceding claims, wherein, in the event that data transmission is disabled and no request is detected, no pieces of requested information is output and its output is not initiated, respectively.

6. The method according to any of the preceding claims, further comprising:
- determining new piece of timer information (205) such that, upon its expiration, the method is executed again.

7. The method according to one of the preceding claims, wherein the communication interface establishes a wireless communication connection to a receiving unit, wherein the communication interface further comprises at least one transceiver for transmitting and receiving pieces of information.

8. A device, in particular, an electronic consumption meter (130), configured to perform the method according to any one of claims 1 to 7 or comprising respective means for performing the steps according to any one of claims 1 to 7.

9. A system comprising one or more devices (130) configured to perform the method according to any one of claims 1 to 7 or comprising means for performing the steps of the method according to any one of claims 1 to 7, and at least one receiving device configured to transmit and/or receive pieces of information from and/or to the one or more devices.

10. A computer program comprising program instructions that cause a processor (310) to perform the method according to any one of claims 1 to 7 when the computer program is running on the processor.

## Revendications

1. Méthode, exécutée par au moins un dispositif, comprenant :
- détecter ou déterminer une information d'indicateur actif (201) indicative d'une transmission de données active de données et/ou d'informations stockées par l'au moins un dispositif ;
- activer une transmission de données des données et/ou informations stockées (202) au moins partiellement basé sur l'information d'indicateur actif, et sur une information de minuterie indicative d'une période de temps après l'expiration de laquelle la transmission de données est désactivée ;
- détecter une demande (203), où la demande est indicative d'une ou plusieurs informations devant être émises dans le cadre de la transmission de données ;
- émettre ou initier l'émission des informations demandées (204) ;
- détecter au moins une information de paramétrage supplémentaire indicative d'un paramétrage d'une interface de communication, où, basé sur l'information de paramétrage supplémentaire, au moins une première détermination de l'information de minuterie a lieu ; et
- détecter ou déterminer une information de réinitialisation (208) indicative d'un réglage de l'information d'indicateur actif, où l'information de réinitialisation remet à zéro prématurément la période de temps représentée par l'information de minuterie et l'expiration de cette période de temps représentée par l'information de minuterie recommence depuis le début ;
- où l'information d'indicateur actif déclenche l'expiration de la période de temps représentée par l'information de minuterie ; et
- où l'information de minuterie provoque en outre qu'après l'expiration de la période de temps représentée par l'information de minuterie, la transmission de données est désactivée conformément à une durée prédéfinie également représentée par l'information de minuterie.

2. Méthode selon une des revendications précédentes, où les données et/ou informations stockées et/ou les informations demandées représente ou comprend un ou plusieurs des paramètres suivants i) à iii) :
i) relevé de compteur d'une quantité de consommation détectée ;
ii) évolution de la consommation sur une période de temps prédéfinie ; et
iii) information de paramétrage pour l'au moins un dispositif.

3. Méthode selon une des revendications précédentes, comprenant en outre :
- détecter une ou plusieurs informations de consommation indicatives d'un temps, d'un lieu, d'une date, d'une quantité de consommation d'électricité, de gaz, d'eau et/ou de chaleur, ou d'une combinaison de ceux-ci ; et
- stocker la ou les informations de consommation comme données et/ou informations stockées.

4. Méthode selon une des revendications précédentes, où l'information de paramétrage supplémentaire représente ou comprend en outre un ou plusieurs des paramètres suivants a) à e) :
a) fréquence pour émettre et/ou recevoir des informations ;
b) bande passante à utiliser pour émettre et/ou recevoir des informations ;
c) méthode de modulation à utiliser pour émettre et/ou recevoir des informations ;
d) méthode de codage à utiliser pour émettre et/ou recevoir des informations ; et
e) adapter la période de temps représentée par l'information de minuterie.

5. Méthode selon une des revendications précédentes, où, dans le cas où la transmission de données est désactivée et aucune demande n'est détectée, aucune information demandée n'est émise ou son émission n'est pas initiée.

6. Méthode selon une des revendications précédentes, comprenant en outre :
- déterminer une nouvelle information de minuterie (205), de telle sorte qu'après son expiration la méthode est à nouveau exécutée.

7. Méthode selon une des revendications précédentes, où l'interface de communication établit une connexion de communication sans fil à une unité de réception, où l'interface de communication a en outre au moins un transceiver pour émettre et/ou recevoir des informations.

8. Dispositif, en particulier un compteur de consommation électronique (130), configuré pour une exécution de la méthode selon une des revendications 1 à 7 ou comprenant des moyens respectifs pour une exécution des étapes selon une des revendications 1 à 7.

9. Système, comprenant un ou plusieurs dispositifs (130) qui sont configurés pour une exécution de la méthode selon une des revendications 1 à 7 ou qui ont des moyens pour une exécution des étapes de la méthode selon une des revendications 1 à 7, et au moins un dispositif de réception qui est configuré pour émettre et/ou recevoir des informations depuis et/ou vers le ou les dispositifs.

10. Programme informatique, comprenant des instructions de programme qui incitent un processeur (310) à exécuter la méthode selon une des revendications 1 à 7 lorsque le programme informatique est exécutée sur le processeur.
